# EUROPÄISCHE PATENTSCHRIFT

(11) **EP 3 829 950 B1**
(45) Veröffentlichungstag und Bekanntmachung des Hinweises auf die Patenterteilung: **26.04.2023**
(21) Anmeldenummer: 19745060.4
(22) Anmeldetag: 15.07.2019
(51) Int. Cl.: B61H 5/00, F16D 55/224, F16D 65/095, F16D 65/097

(54) **BELAGHALTER FÜR EINE BREMSBELAGHALTERUNG EINES SCHIENENFAHRZEUGS UND BREMSBELAGHALTERUNG**
RAIL VEHICLE PAD CARRIER
SUPPORT DE GARNITURE DE FREIN D'UN VÉHICULE FERROVIAIRE

(30) Priorität: 31.07.2018 DE 102018118517
(43) Veröffentlichungstag der Anmeldung: 09.06.2021
(73) Patentinhaber: KNORR-BREMSE Systeme für Schienenfahrzeuge GmbH, 80809 München (DE)
(72) Erfinder: MÜLLEK, Ferenc, 8000 Szekesfehervar (HU); ELSTORPFF, Marc-Gregory, 80368 München (DE); FÜLÖP, Attila, 1106 Budapest (HU); HAUER, Balazs, 1115 Budapest (HU)
(86) Internationale Anmeldenummer: PCT/EP2019/069032
(87) Internationale Veröffentlichungsnummer: WO 2020/025307

(56) Entgegenhaltungen:
- EP-A1- 2 939 899
- EP-A1- 2 940 339
- DE-A1-102009 006 290
- US-A1- 2016 159 375

## Beschreibung

Die vorliegende Erfindung betrifft einen Belaghalter für eine Bremsbelaghalterung eines Schienenfahrzeugs gemäß dem Oberbegriff des Anspruchs 1 sowie eine Bremsbelaghalterung.

Gattungsgemäße Belaghalter für eine Bremsbelaghalterung für Schienenfahrzeuge weisen eine Andruckplatte auf, an deren Rückseite ein Führungssteg zur Halterung eines Bremsbelags angeformt ist. Der Führungssteg erstreckt sich dabei in Längsrichtung des Belaghalters. Auf der dem Führungssteg abgewandten Oberseite der Andruckplatte sind Bremshebellagerstellen, eine Hängelaschenlagerstelle angeformt sowie eine Aufnahme für einen Verschlussriegel zur Arretierung des Bremsbelags in Längsrichtung des Belaghalters.

Ein gattungsgemäßer Belaghalter und eine gattungsgemäße Bremsbelaghalterung sind beispielsweise aus der DE 10 2009 006 290 A1 oder der EP 2 940 339 A1 bekannt.

Der in dieser Druckschrift beschriebene Bremsbelaghalter hat sich in der Praxis an sich bewährt. Die Andruckplatte des Belaghalters ist als durchgängige Platte mit einem Schlitz für den Durchlass einer Sperrleiste des Verschlussflügels zur Sicherung des Bremsbelags in Längsrichtung des Belaghalters ausgebildet. Bei der EP 2 940 339 A1 ist zentral in der Andruckplatte eine fensterartige Ausnehmung vorgesehen.

Zur Halterung des Bremshebels dient eine Nockenwelle, die sich zwischen den Bremshebellagerstellen erstreckt.

Aufgrund der hohen Belastung, der die Belaghalter im Gebrauch ausgesetzt sind, sind die bekannten Belaghalter sehr massiv gebaut, was den Nachteil eines relativ hohen Verschleißes der Belaghalter, insbesondere in deren Lagerstellen, sowie eine beachtliche Lärmentwicklung nach sich zieht.

Aufgabe der vorliegenden Erfindung ist es, einen Belaghalter für eine Bremsbelaghalterung eines Schienenfahrzeugs bereit zu stellen, der sich durch eine geringere Lärmentwicklung sowie durch eine längere Haltbarkeit auszeichnet.

Dieser Aufgabe wird durch einen Belaghalter für eine Bremsbelaghalterung eines Schienenfahrzeuges mit den Merkmalen des Anspruchs 1 sowie durch eine Bremsbelaghalterung eines Schienenfahrzeuges mit den Merkmalen des Anspruchs 9 gelöst.

Der erfindungsgemäße Belaghalter für eine Bremsbelaghalterung eines Schienenfahrzeuges weist eine Andruckplatte mit einem sich in Längsrichtung des Belaghbalters erstreckenden Führungskanal auf, in dem ein Bremsbelag verschiebbar und senkrecht zur Normalen der Andruckplatte formschlüssig festlegbar ist.

Der Belaghalter weist desweiteren einen schwenkbar an der Andruckplatte gelagerten Verschlussriegel zur Arretierung des Bremsbelags in Längsrichtung des Belaghalters auf, der in einer den Bremsbelag in einer Funktionsstellung fixierenden Verriegelungsstellung in den Führungskanal vorsteht und in einer Freigabestellung aus dem Führungskanal entfernt ist.

Der Belaghalter weist desweiteren zwei Bremshebellagerstellen zwischen den Lagerungen des Bremshebels sowie eine Hängelaschenlagerstelle zur Schwenklagerung einer Hängelasche auf.

Die Andruckplatte weist mehrere fensterartige Aufnehmungen auf, wobei wenigstens zwei der Ausnehmungen durch eine Querstrebe voneinander getrennt sind.

Mit einem mit solchen fensterartigen Ausnehmungen versehenen Belaghalter ist eine deutliche Reduzierung der Masse eines solchen Belaghalters ermöglicht.

Ein weiterer Vorteil an diesen fensterartigen Ausnehmungen besteht in einer verbesserten Belüftung der Belaghalter und der an diesen angebrachten Bremsbelägen, so dass die bei einem Bremsvorgang entstandene Abwärme besser an die Umwelt abgegeben werden kann und die maximal erreichten Temperaturen im Belaghalter und im Bremsbelag reduziert sind.

Vorteilhaft ist des Weiteren die reduzierte Schwingmasse des Belaghalters, woraus ein geringerer Verschleiß in den Lagerstellen des Belaghalters resultiert.

Darüber hinaus wird durch die reduzierte Masse des Belaghalters auch eine Reduktion der Geräuschentwicklung während der Fahrt eines Schienenfahrzeugs erreicht.

Die Querstreben ermöglichen die Ausbildung relativ großer Ausnehmungen in der Andruckplatte bei hinreichender Stabilität der Andruckplatte.

Vorteilhafte Ausführungsvarianten der Erfindung sind Gegenstand der Unteransprüche.

Zur verbesserten Belüftung und Wärmeabfuhr ist wenigstens eine der Ausnehmungen in der Flächenmitte der Andruckplatte ausgebildet, im Bereich derer der Bremsbelag angeordnet ist. Der Führungskanal erstreckt sich bevorzugt entlang eines zentralen Bereichs der Andruckplatte in Längsrichtung des Belaghalters.

Gemäß einer weiteren vorteilhaften Ausführungsvariante ist wenigstens eine Ausnehmung in einem nicht in den Führungskanal mündenden, randseitigen Bereich der Andruckplatte ausgebildet, wodurch die Anströmung von Luft an die Seitenflächen des Bremsbelags ermöglicht ist.

Gemäß einer weiteren Ausführungsvariante ist eine Öffnung in der Andruckplatte, durch die der Verschlussriegel zur Arretierung des Bremsbelags in einer Verriegelungsstellung in den Führungskanal vorsteht, in Längsrichtung der Andruckplatte erweitert ausgebildet, was eine zusätzliche Reduzierung der Masse des Belaghalters ermöglicht.

Der Rand einer Öffnung in der Andruckplatte ist gemäß einer weiteren Ausführungsvariante als eine Verschiebung des Bremsbelags in dem Führungskanals begrenzender Anschlag ausgebildet, was den fertigungstechnischen Vorteil hat, dass eine zum Gießen des Belaghalters notwendige Gussform einfacher gestaltet sein kann, da für die Ausbildung des Anschlags keine separate Form gefertigt werden muss.

Gemäß einer weiteren Ausführungsvariante der Erfindung weist der Verschlussriegel eine Sperrleiste auf, an derem ersten Ende sich winklig von einer Anlagekante der Sperrleiste weg eine Schwenkachsenaufnahme zur Aufnahme einer Schwenkachse und an deren zweitem Ende sich winklig von einer Anlagekante der Sperrleiste weg einer Bügelaufnahme zur Aufnahme eines Bügels angeformt ist. Der Verschlussriegel ist in dieser Weise auf die notwendige Geometrie beschränkt ausgebildet und derart ebenfalls gewichtsoptimiert geformt.

Gemäß einer weiteren Ausführungsvariante weist jeder der Bremshebellagerstellen zwei Lagerbacken mit einer zentralen Bohrung zur Aufnahme eines die Lagerbacken miteinander Bolzens auf. Jede der Lagerbacken weist dabei einen sich radial zur Bohrung erstreckenden, von der Bohrung ausgehenden Schlitz und eine senkrecht zum Schlitz ausgerichtete Durchgangsbohrung zur Aufnahme eines Zuspannelements auf, mit dem der Bolzen durch Zuspannen verklemmbar ist.

Diese ermöglicht, anstelle einer durchgehenden Lagerachse für den Bremshebel zwei separate Bolzen vorzusehen, die zwischen den jeweiligen Lagerbacken an der jeweiligen Bremshebellagerstelle eingespannt sind und damit zu einer weiteren Gewichtsersparnis beitragen.

Die klemmende Bolzen-Belaghalter-Verbindung ermöglicht darüber hinaus eine präzisere Belagspieleinstellung, da diese Verbindung kein Lagerspiel zwischen Belaghalter und Bremshebel aufweist.

Die präzisere Belagspieleinstellung ermöglicht darüber hinaus eine Reduktion der Schwingungsamplitude, ausgelöst durch die von der Bremszangenmasse verursachten Kräfte.

Zur axialen Sicherung dieser Bolzen weisen diese wenigstens eine Umfangsnut auf, in der im montierten Zustand ein Halsstück des Zuspannelements einliegt.

Die Zuspannelemente erfüllen somit zwei Aufgaben, nämlich zum einen das Zuspannen des Bolzens und zum zweiten die axiale Sicherung des Bolzens, wodurch ein weiteres Bauteil und damit zusätzliche Masse eingespart wird.

Die Bremsbelaghalterung für ein Schienenfahrzeug zeichnet sich durch einen wie oben beschriebenen Belaghalter aus.

Nachfolgend werden weitere Ausführungsbeispiele der Erfindung anhand der beiliegenden Zeichnungen näher erläutert. Es zeigen:
- Fig. 1: eine perspektivische Ansicht einer Ausführungsvariante einer erfindungsgemäßen Bremsbelaghalterung,
- Fig. 2-4: eine perspektivische Ansicht einer Ausführungsvariante eines erfindungsgemäßen Belaghalters aus unterschiedlichen Perspektiven,
- Fig. 5: eine Seitenschnittansicht der in Fig. 1 gezeigten Bremsbelaghalterung und
- Fig. 6: eine Frontansicht auf einen Verschlussriegel und dahinter gelagerten Bolzen einer Bremshebellagerstelle und Bolzen einer Hängelaschenlagerstelle.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Bremsbelaghalterung, des Belaghalters, des Bremsbelags, des Bremshebels, der Andruckplatte, der Hängelasche, des Verschlussriegels und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

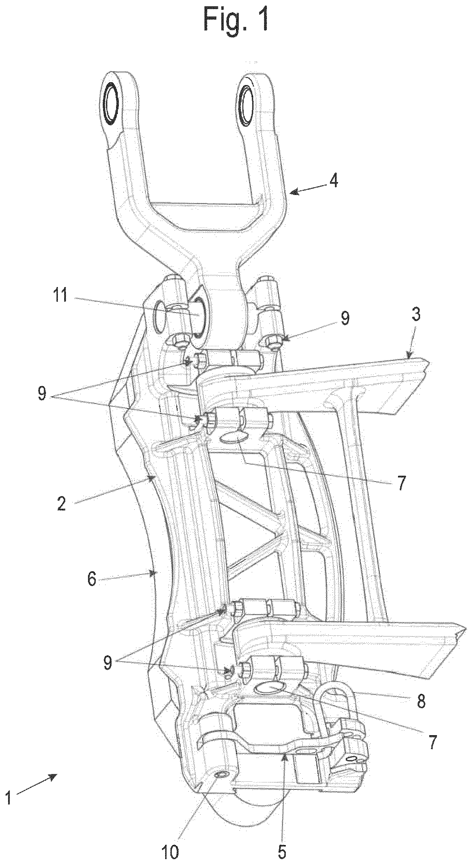

In der **Fig. 1** ist mit dem Bezugszeichen 1 insgesamt eine Ausführungsvariante einer erfindungsgemäßen Bremsbelaghalterung eines Schienenfahrzeuges bezeichnet.

Die Bremsbelaghalterung weist einen Belaghalter 2 auf, der zwei Bremshebellagerstellen 23 zur Lagerung eines Bremshebels 3 aufweist.

Die Bremshebellagerstellen 23 weisen geschlitzte Lagerbacken 24 auf, die zentral an der Lagerachse 7 aufliegen, die durch Augen 31 des Bremshebels 3 geführt sind, der so um eine sich in Längsrichtung des Belaghalters 2 erstreckende Achse schwenkbar am Belaghalter 2 gelagert ist und im Fall eines Bremsvorgangs gegen eine Andruckplatte 21 des Belaghalters 2 drückt.

Im Bereich eines in Richtung der Längsachse des Belaghalters 2 betrachteten ersten Endes des Belaghalters 2 ist eine Hängelasche 4 schwenkbar gelagert. Eine an der Andruckplatte 21 angeordnete Hängelaschenlagerstelle 25 weist ebenfalls geschlitzte Lagerbacken 26 auf, die senkrecht zu den Lagerbacken 24 der Bremshebellagerstellen 23 ausgerichtet sind.

Jede der an den Lagerbacken 26 der Hängelaschenlagerstelle 25 und auch der Lagerbacken 24 der Bremshebellagerstelle 23 weist eine zentrale Bohrung 241, 260 auf, in denen ein die Lagerbacken 24, 26 miteinander verbindender Bolzen 7, 11 aufgenommen ist.

Während sich der die Lagerbacken 24 der Bremshebellagerstelle 23 miteinander verbindende Bolzen 7 in eine Längsrichtung des Belaghalters 2 erstreckt, erstreckt sich der Bolzen 11, der zwischen den Lagerbacken 26 der Hängelaschenlagerstelle 25 angeordnet ist, quer zur Längsrichtung des Belaghalters 2.

Jede der Lagerbacken 24, 26 weist einen sich quer zur Bohrung 241, 261 erstreckenden, von der Bohrung 241, 261 ausgehenden Schlitz 242, 262 sowie eine senkrecht zu diesem Schlitz ausgerichtete Durchgangsbohrung 243, 263 zur Aufnahme eines Zuspannelements 9 auf, mit dem der Bolzen 7, 11 durch Zuspannen verklemmbar ist.

Das Zuspannelement 9 ist dabei bevorzugt als Schraubbolzen mit einem Kopf 91, einen Hals 92, der zumindest teilweise mit einem Gewinde versehen ist, und einer auf das Gewinde aufschraubbaren Mutter 93 ausgebildet.

Durch Anziehen des Zwischenelements 9 wird der Schlitz 242, 262 und damit auch der Durchmesser der Bohrung 241, 261 verkleinert, wodurch der jeweilige Bolzen 7, 11 festgeklemmt wird.

Zur axialen Fixierung des Bolzen 7, 11 (axial zur Längsachse des jeweiligen Bolzens 7, 11) weist jeder der Bolzen 7, 11 wenigstens eine Umfangsnut 71, 111 auf, in der im montierten Zustand des Bolzens 7, 11 ein Halsstück 92 des Zuspannelements 9 zur axialen Sicherung des Bolzens 7, 11 einliegt.

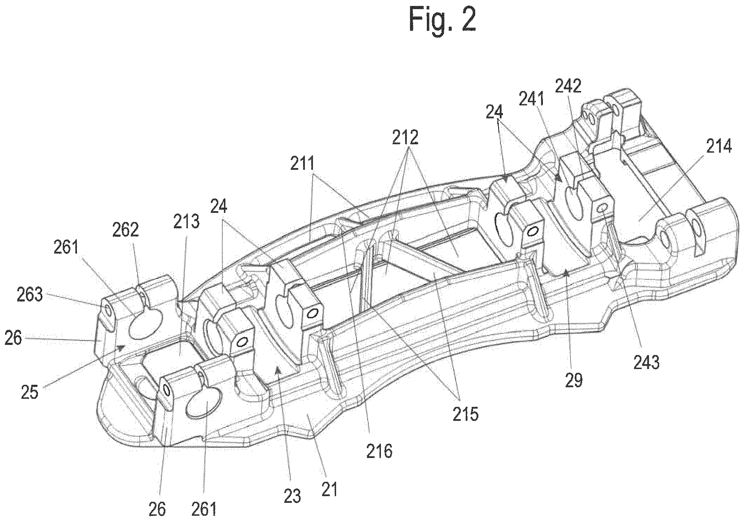

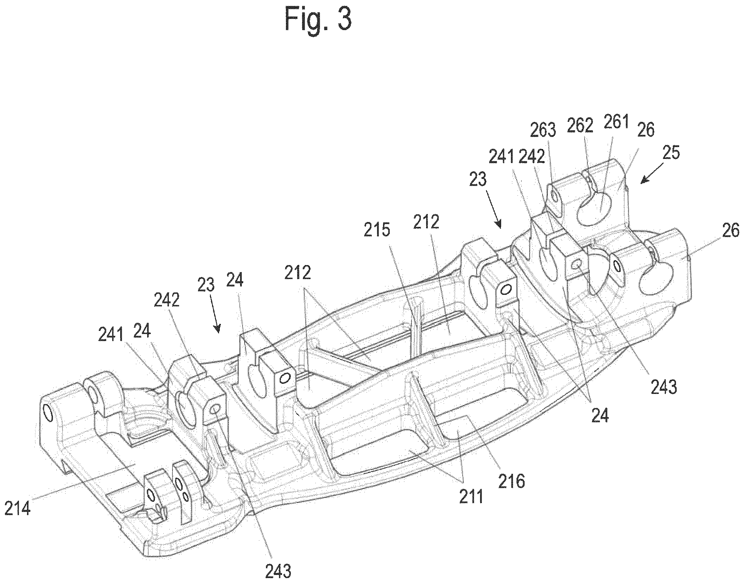

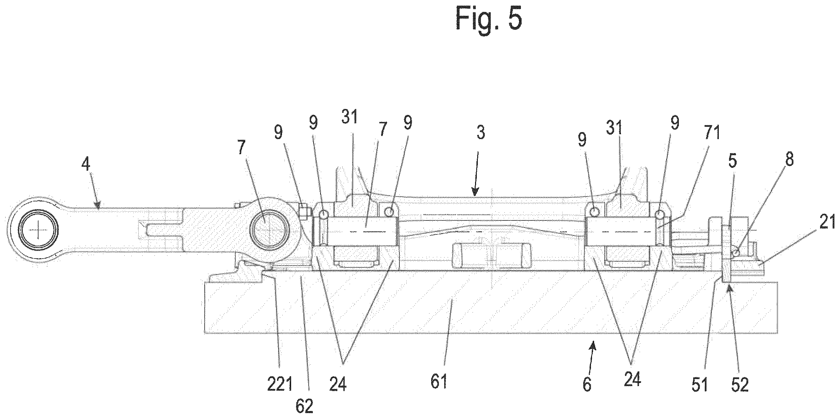

Wie insbesondere in den **Fig. 2 bis 4** gezeigt, weist die Andruckplatte 21 des Belaghalters einen sich in Längsrichtung des Belaghalters 2 erstreckenden Führungskanal 22 auf einer den Bremshebellagerstellen 23 abgewandten Unterseite der Andruckplatte 21 auf. In diesem Führungskanal 22 ist, wie in den **Fig. 1** und **5** gezeigt, ein Bremsbelag 6 verschiebbar und senkrecht zur Normalen der Andruckplatte 21 formschlüssig festlegbar.

Der Führungskanal 22 ist dabei im Querschnitt bevorzugt schwalbenschwanzförmig ausgebildet. Entsprechend weist der Bremsbelag 6 einen in die Führungsnut 22 einführbaren Führungssteg 62 auf, der fest mit einem Reibbelag 61 verbunden ist. Bei der in Figur 5 gezeigten Ausführungsvariante ist ein Teil des Reibbelags 61 selbst als Führungssteg 62 geformt.

Der Belaghalter 2 weist desweiteren einen schwenkbaren an der Andruckplatte 21 gelagerten Verschlussriegel 5 zur Arretierung des Bremsbelags 6 in Längsrichtung des Belaghalters 2 auf.

Dieser Verschlussriegel 5 steht in einer den Bremsbelag 6 in einer Funktionsstellung fixierenden Verriegelungsstellung in den Führungskanal 22 vor, wie es beispielsweise in Fig .5 gezeigt ist. In einer Freigabestellung des Verschlussriegels 5 wird, beispielsweise im Falle eines durchzuführenden Bremsbelagwechsels, der Verschlussriegel 5 aus dem Führungskanal 22 herausgeschwenkt, was ein Herausschieben des Bremsbelags 6 aus dem Führungskanal 22 ermöglicht.

Wie in den Fig. 1 bis 4 gezeigt, weist die Andruckplatte 21 mehrere fensterartige Ausnehmungen 211, 212, 213, 214 auf.

Mindestens eine der fensterartigen Ausnehmungen 212 ist dabei in der Flächenmitte der Andruckplatte 21 ausgebildet.

Zur Stabilisierung des Belaghalters 2 sind die Ausnehmungen 212 hier durch Querstreben 215 voneinander getrennt. Bei der in den Fig. 1-4 gezeigten Ausführungsvariante sind im Bereich der Flächenmitte der Andruckplatte 21 insgesamt drei solcher Ausnehmungen 212 ausgebildet, die durch zwei schrägwinklig ausgerichtete Querstreben 215 unterbrochen sind. Denkbar ist auch eine andere Anzahl oder Geometrie solcher Ausnehmungen.

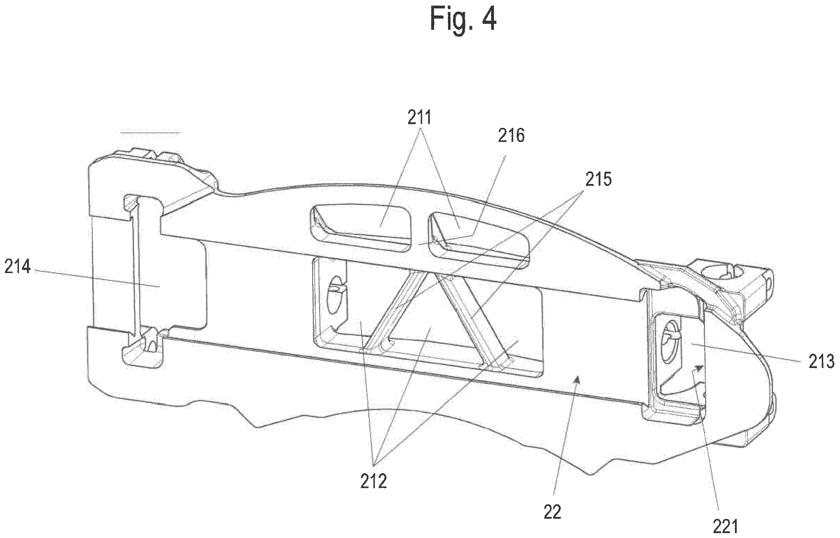

Weitere Ausnehmungen 211 sind vorzugsweise in einem nicht in den Führungskanal 22 mündenden randseitigen Bereich der Andruckplatte 21 ausgebildet, wie es insbesondere in Fig. 4 gut zu erkennen ist.

Auch die in den Fig. 1 bis 4 gezeigten zwei Ausnehmungen 211 im randseitigen Bereich der Andruckplatte 21 sind durch einen Quersteg 216 voneinander getrennt.

Wie desweiteren in den Fig. 1 bis 4 erkennbar ist, ist eine weitere Ausnehmung 214 in einem Bereich der Andruckplatte 21 vorgesehen, in dem eine Öffnung vorgesehen ist, durch die der Verschlussriegel 4 zur Arretierung des Bremsbelags 6 in der Verriegelungsstellung in den Führungskanal 22 vorsteht. Die Ausnehmung 214 erweitert diese Öffnung, die an sich als Schlitz ausgebildet sein könnte, in Längsrichtung der Andruckplatte 21, was zu einer weiteren Massereduzierung des Belaghalters beiträgt.

Eine nochmals weitere Ausnehmung 213 ist in einem Bereich der Andruckplatte 21 unterhalb der Hängelaschenlagerstelle 25 ausgebildet.

Die Ausnehmung 213 ist hier darüber hinaus so positioniert, dass ein Rand dieser Ausnehmung 213 in der Andruckplatte 21 als eine Verschiebung des Bremsbelags 6 in den Führungskanal 22 begrenzender Anschlag 221 ausgebildet ist.

Dieser Anschlag 221 dient dabei der axialen Positionierung des Bremsbelags 6, der im durch den Verschlussriegel 4 verriegelten Zustand zwischen einer Sperrleiste 41 des Verschlussriegels 5 und dem Anschlag 221 in eine Längsrichtung des Belaghalters 2 gesichert ist.

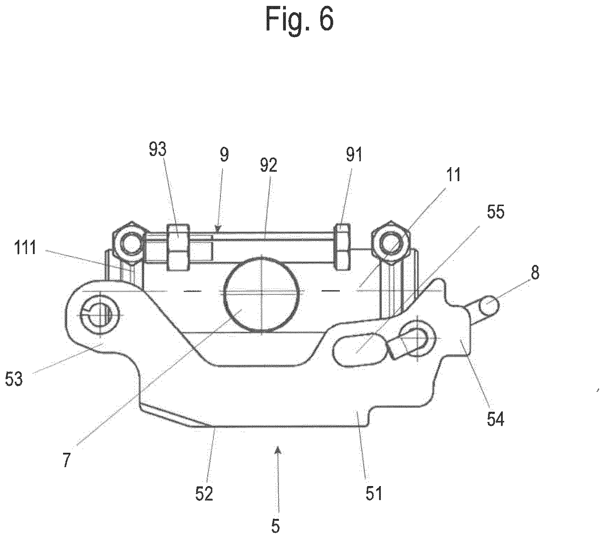

Der Verschlussriegel 5 weist, wie insbesondere in **Fig. 6** dargestellt ist, eine Sperrleiste 51 auf, an derem ersten Ende sich winklig von einer Anlagekante 52 der Sperrleiste 51 weg eine Schwenkachsenaufnahme 53 zur Aufnahme einer Schwenkachse 10 und an deren zweitem Ende sich winklig von einer Anlagekante 52 der Sperrleiste 51 weg eine Bügelaufnahme 54 zur Aufnahme eines Bügels 8 angeformt ist.

Die Anlagekante 52 der Sperrleiste 51 ist in der Verrieglungsstellung der Sperrleiste 51 durch einen schmalen Spalt von der dem Belaghalter 2 zugewandten Rückseite des Bremsbelags 6 beabstandet.

Der Bügel 8 dient dabei der Begrenzung der Schwenkbewegung des Verschlussriegels 5 und weist im Bereich der Bügelaufnahme 54 eine Werkzeugaufnahme 55 auf, in die ein (hier nicht dargestelltes) Werkzeug eingesetzt werden kann, um dem Verschlussriegel 5 aus der Verriegelungsstellung in die Freigabestellung zu verschwenken.

Der Bügel 8 ist so angeordnet, dass eine von dem Bügel 8 auf den Verschlussriegel 5 wirkende Federkraft ein Drehmoment auf den Verschlussriegel 5 ausübt, das den Verschlussriegel 5 in Schliessrichtung dreht.

Beim Öffnen des Bügels 8 wirkt diese Federkraft zunächst in Richtung der Schwenkachse 10, was einen instabilen Zustand darstellt, da in diesem Zustand durch den Bügel 8 kein Drehmoment auf den Verschlussriegel 5 ausgeübt wird, bei maximal großer Federkraft.

Verschwenkt man den Bügel 8 dann weiter in Öffnungsrichtung, bewirkt die vom Bügel 8 auf den Verschlussriegel 5 ausgeübte Federkraft ein Drehmoment, das die Öffnungsbewegung des Verschlussriegels unterstützt, bis der Bügel 8 seine Neutralstellung erreicht hat, bei der von dem Bügel 8 keine Kraft mehr auf den Verschlussriegel 5 ausgeübt wird.

Der Belaghalter 2 ist bevorzugt aus Gusseisen EM1563-GJS600-10 gefertigt und weist damit gegenüber dem üblicherweise eingesetzten Gussmaterial GJS400-15 eine erhöhte Härte auf, was zu einer Erhöhung der Verschleißlebensdauer sowohl des Führungskanals 22 als auch der Kontaktflächen zwischen Bremshebel 3 und Belaghalter 2 führt.

### BEZUGSZEICHENLISTE

- 2: Belaghalter
- 21: Andruckplatte
- 211: Ausnehmung
- 212: Ausnehmung
- 213: Ausnehmung
- 214: Ausnehmung
- 215: Querstrebe
- 216: Querstrebe
- 22: Führungskanal
- 221: Anschlag
- 23: Bremshebellagerstelle
- 24: Lagerbacke
- 241: Bohrung
- 242: Schlitz
- 243: Durchgangsbohrung
- 25: Hängelaschenlagerstelle
- 26: Lagerbacke
- 261: Bohrung
- 262: Schlitz
- 263: Durchgangsbohrung
- 27: Schlitz
- 28: Kontur

- 3: Bremshebel
- 31: Befestigungsauge

- 4: Hängelasche
- 41: Befestigungsauge

- 5: Verschlussriegel
- 51: Sperrleiste
- 52: Anlagekante
- 53: Schwenkachsenaufnahme
- 54: Bügelaufnahme
- 55: Werkzeugaufnahme

- 6: Bremsbelag
- 61: Führungssteg
- 62: Reibbelag

- 7: Lagerachse
- 8: Bügel

- 9: Zuspannelement
- 91: Kopf
- 92: Hals
- 93: Mutter

- 10: Schwenkachse
- 11: Lagerachse

## Patentansprüche

1. Belaghalter (2) für eine Bremsbelaghalterung (1) eines Schienenfahrzeugs, aufweisend
eine Andruckplatte (21) mit einem sich in Längsrichtung des Belaghalters (2) erstreckenden Führungskanal (22), in dem ein Bremsbelag (6) verschiebbar und senkrecht zur Normalen der Andruckplatte (21) formschlüssig festlegbar ist,
einen schwenkbar an der Andruckplatte (21) gelagerter Verschlussriegel (5) zur Arretierung des Bremsbelags (6) in Längsrichtung des Belaghalters (2), der in einer den Bremsbelag (6) in einer Funktionsstellung fixierenden Verriegelungsstellung in den Führungskanal (22) vorsteht und in einer Freigabestellung aus dem Führungskanal (22) entfernt ist,
zwei Bremshebellagerstellen (23) zur Schwenklagerung eines Bremshebels (3),
eine Hängelaschenlagerstelle (25) zur Schwenklagerung einer Hängelasche (4),
**dadurch gekennzeichnet, dass**
die Andruckplatte (21) mehrere fensterartige Ausnehmungen (211, 212, 213, 214) aufweist, wobei wenigstens zwei der Ausnehmungen (211, 212) durch eine Querstrebe (215, 216) voneinander getrennt sind.

2. Belaghalter (2) nach Anspruch 1,
**dadurch gekennzeichnet, dass**
wenigstens eine Ausnehmung (212) in der Flächenmitte der Andruckplatte (21) ausgebildet ist.

3. Belaghalter (2) nach einem der vorhergehenden Ansprüche,
**dadurch gekennzeichnet, dass**
wenigstens eine Ausnehmung (211) in einem nicht in den Führungskanal (22) mündenden, randseitigen Bereich der Andruckplatte (21) ausgebildet ist.

4. Belaghalter (2) nach einem der vorhergehenden Ansprüche,
**dadurch gekennzeichnet, dass**
eine Öffnung (214) in der Andruckplatte (21), durch die der Verschlussriegel (5) zur Arretierung des Bremsbelags (6) in einer Verriegelungsstellung in den Führungskanal (22) vorsteht, in Längsrichtung der Andruckplatte (21) erweitert ausgebildet ist.

5. Belaghalter (2) nach einem der vorhergehenden Ansprüche,
**dadurch gekennzeichnet, dass**
ein Rand einer Öffnung (213) in der Andruckplatte (21) als eine Verschiebung des Bremsbelags (6) in dem Führungskanals (22) begrenzender Anschlag (221) ausgebildet ist.

6. Belaghalter (2) nach einem der vorhergehenden Ansprüche,
**dadurch gekennzeichnet, dass**
der Verschlussriegel (5) ein Sperrleiste (51) aufweist, an deren erstem Ende sich winklig von einer Anlagekante (52) der Sperrleiste (51) weg eine Schwenkachsenaufnahme (53) zur Aufnahme einer Schwenkachse (10) und an deren zweitem Ende sich winklig von einer Anlagekante (52) der Sperrleiste (51) weg eine Bügelaufnahme (54) zur Aufnahme eines Bügels (8) angeformt ist.

7. Belaghalter (2) nach einem der vorhergehenden Ansprüche,
**dadurch gekennzeichnet, dass**
jede der Bremshebellagerstellen (23) zwei Lagerbacken (24) mit einer zentralen Bohrung (241) zur Aufnahme eines die Lagerbacken (24) miteinander verbindenden Bolzens (7) aufweist, wobei jede der Lagerbacken (24) einen sich radial zur Bohrung (241) erstreckenden, von der Bohrung (241) ausgehenden Schlitz (242) und eine senkrecht zum Schlitz (242) ausgerichtete Durchgangsbohrung (243) zur Aufnahme eines Zuspannelements (9) aufweist, mit dem der Bolzen (7) durch Zuspannen verklemmbar ist.

8. Belaghalter (2) nach Anspruch 7,
**dadurch gekennzeichnet, dass**
der Bolzen (7) wenigstens eine Umfangsnut (71) aufweist, in der im montierten Zustand ein Halsstück (92) des Zuspannelements (9) zur axialen Sicherung des Bolzens (7) in den zentralen Bohrungen (241) der Lagerbacken (24) einliegt.

9. Bremsbelaghalterung (1) für ein Schienenfahrzeug, aufweisend einen Belaghalter (2),
einen an dem Belaghalter (2) arretiert gehaltenen Bremsbelag (6),
**dadurch gekennzeichnet, dass**
der Belaghalter (2) gemäß einem der vorstehenden Ansprüche ausgebildet ist.

## Claims

1. Pad holder (2) for a brake pad mount (11) of a rail vehicle, having
a pressing-on plate (21) with a guide channel (22), which extends in the longitudinal direction of the pad holder (2) and in which a brake pad (6) can be located displaceably and positively perpendicular to the normal of the pressing-on plate (21),
a locking bar (5) pivotably mounted at the pressing-on plate (21) for locking the brake pad (6) in the longitudinal direction of the pad holder (2), which locking bar (5) projects into the guide channel (22) in a locking position fixing the brake pad (6) in a functional position and can be removed from the guide channel (22) in a release position,
two brake lever mounting points (23) for the pivotable mounting of a brake lever (3),
a suspension bracket mounting point (25) for the pivotable mounting of a suspension bracket (4),
**characterised in that**
the pressing-on plate (21) has a plurality of window-like recesses (211, 212, 213, 214), wherein at least two of the recesses (211, 212) are separated from each other by a transverse strut (215, 216).

2. Pad holder (2) according to claim 1,
**characterised in that**
at least one recess (212) is formed in the centre of the area of the pressing-on plate (21).

3. Pad holder (2) according to any of the preceding claims,
**characterised in that**
at least one recess (211) is formed in an edge region of the pressing-on plate (21), which does not terminate into the guide channel (22).

4. Pad holder (2) according to any of the preceding claims,
**characterised in that**
an opening (214) in the pressing-on plate (21), through which the locking bar (5) projects into the guide channel (22) to lock the brake pad (6) in a locking position, is designed to be widened in the longitudinal direction of the pressing-on plate (21).

5. Pad holder (2) according to any of the preceding claims,
**characterised in that**
an edge of the opening (213) in the pressing-on plate (21) is designed as a stop (221) limiting a displacement of the brake pad (6) in the guide channel (22).

6. Pad holder (2) according to any of the preceding claims,
**characterised in that**
the locking bar (5) has a blocking ledge (51), at the first end of which there is formed a pivot axis receptacle (53) extending at an angle from a locating edge (52) of the blocking ledge (51) for accommodating a pivot axis (10) and at the second end of which there is formed a bow receptacle (54) extending at an angle from a locating edge (52) of the blocking ledge (51) for accommodating a bow (8).

7. Pad holder (2) according to any of the preceding claims,
**characterised in that**
each of the brake lever mounting points (23) has two bearing jaws (24) with a central bore (241) for accommodating a bolt (7) joining the bearing jaws (24) to each other, wherein each of the bearing jaws (24) has a slot (242) extending radially with respect to the bore (241) and starting from the bore (241) and a through-hole (243) oriented perpendicularly to the slot (242) for accommodating an application element (9), to which the bolt (7) can be clamped by application.

8. Pad holder (2) according to claim 7,
**characterised in that**
the bolt (7) has at least one circumferential groove (71), in which a neck piece (92) of the application element (9) lies in the assembled state for axially securing the bolt (7) in the central bores (241) of the bearing jaws (24).

9. Brake pad mount (1) for a rail vehicle, having
a pad holder (2),
a brake pad (6) held at the pad holder (2) in a locked position,
**characterised in that**
the pad holder (2) is designed according to any of the preceding claims.

## Revendications

1. Support (2) de garniture pour une fixation (1) de garniture de frein d'un véhicule ferroviaire, comportant
un plateau (21) d'application d'une pression ayant un conduit (22) de guidage, qui s'étend dans la direction longitudinale du support (2) de garniture, dans lequel une garniture (6) de frein peut coulisser et qui peut être fixé à complémentarité de forme, perpendiculairement à la normale, au plateau (21) d'application d'une pression,
un verrou (5) de fermeture monté pivotant sur le plateau (21) d'application d'une pression pour l'arrêt de la garniture (6) de frein dans la direction longitudinale du support (2) de garniture, qui, dans une position de verrouillage immobilisant la garniture (6) de frein dans une position de fonction, est en saillie dans le conduit (22) de guidage, et qui, dans une position de déverrouillage, est éloigné du conduit (22) de guidage,
deux points (23) de palier de levier de frein pour le montage à pivotement d'un levier (3) de frein,
un point (25) de palier d'une jumelle suspendue pour le montage à pivotement d'une jumelle (4) suspendue,
**caractérisé en ce que**
le plateau (21) d'application d'une pression a plusieurs évidements (211, 212, 213, 214) du type en fenêtre, dans lequel au moins deux des évidements (211, 212) sont séparés l'un de l'autre par une traverse (215, 216).

2. Support (2) de garniture suivant la revendication 1,
**caractérisé en ce qu'**
au moins un évidement (212) est constitué dans le milieu de la surface du plateau (21) d'application d'une pression.

3. Support (2) de garniture suivant l'une des revendications précédentes,
**caractérisé en ce qu'**
au moins un évidement (211) est constitué dans une partie du côté du bord et ne débouchant pas dans le conduit (22) de guidage du plateau (21) d'application d'une pression.

4. Support (2) de garniture suivant l'une des revendications précédentes,
**caractérisé en ce qu'**
une ouverture (214) dans le plateau (21) d'application d'une pression, par laquelle le verrou (5) de fermeture est, pour l'arrêt de la garniture (6) de frein dans une position de verrouillage, en saillie dans le conduit (22) de guidage, s'élargit dans la direction longitudinale du plateau (21) d'application d'une pression.

5. Support (2) de garniture suivant l'une des revendications précédentes,
**caractérisé en ce qu'**
un bord d'une ouverture (213) dans le plateau (21) d'application d'une pression est constitué sous la forme d'une butée (221) limitant un déplacement de la garniture (6) de frein dans le conduit (22) de guidage.

6. Support (2) de garniture suivant l'une des revendications précédentes,
**caractérisé en ce que**
le verrou (5) de fermeture a une réglette (51) de blocage, à une première extrémité de laquelle est formé, en s'éloignant, suivant un angle, d'un bord (52) d'application de la réglette (51) de blocage, un logement (53) d'axe de pivotement pour la réception d'un axe (10) de pivotement et, à sa deuxième extrémité est formée, en s'éloignant, suivant un angle, d'un bord (52) d'application de la réglette (51) de blocage, un logement (54) d'étrier pour la réception d'un étrier (8).

7. Support (2) de garniture suivant l'une des revendications précédentes,
**caractérisé en ce que**
chacun des points (23) de palier du levier de frein a deux mâchoires (24) de palier ayant un alésage (241) central de réception d'un axe (7) reliant entre elles les mâchoires (24) de palier, dans lequel chacune des mâchoires (24) de palier a une fente (242), s'étendant radialement par rapport à l'alésage (241), et partant de l'alésage (241), et un trou (243) de passage, dirigé perpendiculairement à la fente (242), de réception d'un élément (9) de blocage, par lequel l'axe (7) peut être serré par blocage.

8. Support (2) de garniture suivant la revendication 7,
**caractérisé en ce que**
l'axe (7) a au moins une rainure (71) de pourtour, dans lequel, dans l'état monté, une pièce (92) de collet de l'élément (9) de blocage pénètre, pour la fixation axiale de l'axe (7), dans les alésages (241) centraux des mâchoires (24) de palier.

9. Fixation (1) de garniture de frein d'un véhicule ferroviaire, comprenant
un support (2) de garniture,
une garniture (6) de frein maintenue arrêtée sur le support (2) de garniture,
**caractérisée en ce que**
le support (2) de garniture est constitué suivant l'une des revendications précédentes.
